(19) Europäisches Patentamt / European Patent Office / Office européen des brevets

(11) **EP 3 482 626 A1**

(12) **EUROPEAN PATENT APPLICATION**
published in accordance with Art. 153(4) EPC

(43) Date of publication:
**15.05.2019 Bulletin 2019/20**

(21) Application number: **17823937.2**

(22) Date of filing: **09.06.2017**

(51) Int Cl.:
**A01G 2/00** (2018.01)

(86) International application number:
**PCT/JP2017/021502**

(87) International publication number:
**WO 2018/008330 (11.01.2018 Gazette 2018/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.07.2016 JP 2016135867**

(71) Applicant: **FUJIFILM Corporation Tokyo 106-8620 (JP)**

(72) Inventor: **EJIRI, Kiyomi**
**Minami-ashigara-shi**
**Kanagawa 250-0193 (JP)**

(74) Representative: **Klunker IP**
**Patentanwälte PartG mbB**
**Destouchesstraße 68**
**80796 München (DE)**

(54) **PLANT CULTIVATION MEDIUM**

(57) Provided is a growing medium for plants, including a substrate having voids, and a magnetized magnetic particle dispersedly carried by the substrate.

## FIG. 1

EP 3 482 626 A1

**Description**

BACKGROUND OF THE INVENTION

1. Field of the Invention

The present disclosure relates to a growing medium for plants.

2. Description of the Related Art

In recent years, magnetic force of magnetic materials has been used for growing plants.

For example, JP2015-130797A discloses an artificial soil medium including artificial soil particles supporting magnetic materials, in which the magnetic materials are magnetized so as to be attracted to each other. In the artificial soil medium disclosed in JP2015-130797A, the artificial soil particles are strongly attracted to each other and thus aggregate by the action of the magnetic materials. Therefore, planted plants with high tree height or plant height can be reliably supported, and scattering of the artificial soil particles can be prevented.

In addition, it has been known that the magnetic force has a function of promoting the growth of plants, and a method using the magnetic force for growing plants has been proposed.

For example, JP1996-290990A (JP-H08-290990A) discloses a magnetized fertilizer manufactured by mixing Sr (strontium) ferrite magnetic powder with a fertilizer, and then performing granulation, dry, and magnetization, as a fertilizer capable of promoting raising of plants.

SUMMARY OF THE INVENTION

Meanwhile, in an aspect in which the fertilizer is spread on soil so as to be used as in the magnetized fertilizer disclosed in JP1996-290990A (JP-H08-290990A), the magnetic powder is required to be separated and removed from the soil after the completion of growing of plants, from the viewpoint of preventing contamination of soil. However, it can be said that it is difficult to separate the magnetic powder mixed in the soil. In addition, since the magnetized fertilizer disclosed in JP1996-290990A (JP-H08-290990A) is mixed with soil so as to be used, a large amount of the magnetic powder is needed for imparting sufficient magnetic force to plants to promote the growth thereof, which is impractical.

One embodiment of the present invention provides a growing medium for plants capable of realizing an improvement in a germination rate and promotion of plant growth.

Specific means for solving the problems includes the following embodiments.

<1> A growing medium for plants, comprising: a substrate having voids; and a magnetized magnetic particle dispersedly carried by the substrate.

<2> The growing medium for plants according to <1>, in which a coercive force of the magnetic particle is 40 kA/m or higher.

<3> The growing medium for plants according to <1>, in which a coercive force of the magnetic particle is from 40 kA/m to 319 kA/m.

<4> The growing medium for plants according to <1>, in which a coercive force of the magnetic particle is from 120 kA/m to 239 kA/m.

<5> The growing medium for plants according to any one of <1> to <4>, in which a saturation magnetization of the magnetic particle is 35 $Am^2$/kg or higher.

<6> The growing medium for plants according to any one of <1> to <4>, in which a saturation magnetization of the magnetic particle is from 35 $Am^2$/kg to 130 $Am^2$/kg.

<7> The growing medium for plants according to any one of <1> to <4>, in which a saturation magnetization of the magnetic particle is from 40 $Am^2$/kg to 80 $Am^2$/kg.

<8> The growing medium for plants according to any one of <1> to <7>, in which a content rate of the magnetic particle is from 4% by mass to 60% by mass with respect to a total mass of the growing medium for plants.

<9> The growing medium for plants according to any one of <1> to <8>, which is used for hydroponic growing.

<10> The growing medium for plants according to any one of <1> to <9>, which is used as a seedling-raising medium.

According to one embodiment of the present invention, a growing medium for plants capable of realizing an improvement in a germination rate and promotion of plant growth is provided.

BRIEF DESCRIPTION OF THE DRAWINGS

Fig. 1 is a graph showing a relationship between a content rate of magnetic particles in a growing medium for plants and a final germination rate.

Fig. 2 is a graph showing a relationship between the content rate of the magnetic particles in the growing medium for plants and a yield.

DESCRIPTION OF THE PREFERRED EMBODIMENTS

Hereinafter, an example of an embodiment of a growing medium for plants to which the present invention is applied will be described. However, the present invention is not limited to the following embodiment and can be carried out with appropriate modification within the scope of the object of the embodiment of the present invention.

A numerical value range indicated by using "to" in the present specification means a range including numerical values described before and after "to" as a minimum value and a maximum value.

In numerical value ranges described in the present specification in a stepwise manner, an upper limit value or a lower limit value described in one numerical value range may be replaced with an upper limit value or a lower limit value of a numerical value range of other stepwise description. In addition, in the numerical value ranges described in the present specification, an upper limit value or a lower limit value of the numerical value range may be replaced with values shown in examples.

In the present specification, unless otherwise specified, an amount of each component in the growing medium for plants means a total amount of a plurality of substances present in the growing medium for plants in a case where the plurality of substances corresponding to each of components are present in the growing medium for plants.

[Growing Medium for Plants]

The growing medium for plants of the present disclosure is a growing medium for plants in which a magnetized magnetic particle is dispersedly carried by a substrate having voids.

According to the growing medium for plants of the present disclosure, it is possible to realize an improvement in a germination rate and promotion of plant growth.

The reason why such an effect is exhibited by the growing medium for plants of the present disclosure is not clearly known; however, the inventors of the present invention speculate the reason as follows.

The growing medium for plants of the present disclosure is the medium in which the magnetized magnetic particle is dispersedly carried by the substrate. In a case where a seed is sowed in the growing medium for plants of the present disclosure, it is considered that magnetic force of the magnetic particles dispersedly carried by the substrate effectively acts on the seed, thereby improving the germination rate. In addition, the substrate in the growing medium for plants of the present disclosure has the voids, and after rooting, elongated roots are considered to enter the voids of the substrate. Since the magnetized magnetic particles are dispersedly carried by the substrate, a distance between the root and the magnetic particle becomes shorter by the roots entering the voids of the substrate. The magnetic force of the magnetic particle is inversely proportional to the square of a distance from the magnetic particle. In a case where the distance between the root and the magnetic particle becomes shorter, the magnetic force of the magnetic particle effectively acts on the root. As a result, the plant growth is considered to be promoted.

As described above, according to the growing medium for plants of the present disclosure which is capable of realizing the improvement in the germination rate and promotion of plant growth, an improvement in productivity of plants can be expected.

The artificial soil medium disclosed in JP2015-130797A is formed by containing the artificial soil particles supporting the magnetic materials, and has the aspect in which the magnetic materials in the artificial soil particles are magnetized so as to be attracted to each other, and thus the artificial soil particles aggregate. That is, the artificial soil medium disclosed in JP2015-130797A has the aspect different from that of the growing medium for plants of the present disclosure. In addition, an object of JP2015-130797A is to reliably support planted plants with high tree height or plant height and to prevent scattering and runoff of the artificial soil, which greatly differs from the object of the present disclosure.

The magnetized fertilizer disclosed in JP1996-290990A (JP-H08-290990A) contains the magnetic powder capable of promoting the growth of plants, and is spread on soil so as to be used. The magnetic powder is not decomposed, and therefore it is required that the magnetic powder is separated and removed from the soil after the completion of growing of plants. However, it is difficult to separate the magnetic powder mixed in the soil. In addition, since the magnetized fertilizer disclosed in JP1996-290990A (JP-H08-290990A) is mixed with soil so as to be used, a large amount of the magnetic powder is needed for imparting sufficient magnetic force to plants to promote the growth thereof.

In regard to the above case, since the magnetized magnetic particles are dispersedly carried by the substrate in the growing medium for plants of the present disclosure, it is easy to remove the magnetic particles from growing environments such as a hydroponic grow bed or soil, after the completion of growing of plants, for example. In addition, in the growing medium for plants of the present disclosure, the magnetic particles can be present at a place close to the seed and roots, and therefore the magnetic force of the magnetic particle can effectively act on the seed and roots, as described above. Accordingly, the growing medium for plants of the present disclosure can realize the improvement in the germination rate and promotion of the plant growth without requiring a large amount of the magnetic particles unlike the magnetized fertilizer disclosed in JP1996-290990A (JP-H08-290990A) spread on soil so as to be used.

Hereinafter, the growing medium for plants of the present disclosure will be described in detail.

The substrate in the growing medium for plants of the present disclosure has the voids.

The substrate is not particularly limited as long as the substrate has the voids, and can be appropriately selected from known substrates used for the growing medium for plants, depending on the types of plants and the like.

The substrate may be a natural product or a synthetic product.

Examples of the substrate include a sponge, cotton (for example, absorbent cotton), rock wool, nonwoven fabrics, and the like.

Among these, the sponge, cotton, or rock wool is preferable as the substrate from the viewpoint of having water absorbing power and water retaining capacity, the sponge or cotton is more preferable from the viewpoint of cost, and the sponge is even more preferable from the viewpoint that the magnetic particles are easily dispersedly carried by the substrate.

In a case of using the growing medium for plants of the present disclosure as a seedling-raising medium, the rock wool or sponge is preferable as the substrate from the viewpoint of workability of planting out.

The term "seedling-raising medium" means a medium used for raising seedlings until planting out in a hydroponic grow bed or soil. The seedlings raised in the seedling-raising medium are generally planted out together with the medium, and therefore the substrate is required to have strength in consideration of workability. The term "planting out" means transplanting of raised seedlings to a final place where the seedlings will be raised.

The growing medium for plants of the present disclosure is generally used in an environment in contact with water, and therefore it is preferable that the substrate is formed of a water-insoluble material. In a case where the material forming the substrate is water-insoluble, contamination of the soil or water due to the magnetic particles dispersedly carried by the substrate can be prevented. In a case where the growing medium for plants of the present disclosure is applied to hydroponic growing, it is particularly preferable that the substrate is formed of a water-insoluble material because the substrate is always in contact with water.

The term "water-insoluble material" referred herein means a material having a solubility of 1 g or less in 100 g of distilled water in a case where the material is dried at 105°C for 2 hours, and then immersed in the distilled water at 25°C.

For example, in a case where the substrate is the sponge, examples of a material of the sponge include resins such as vinyl chloride resin, urethane resin, polystyrene, polyethylene, polypropylene, and nitrocellulose, a marine sponge, and the like.

Among these, as the material of the sponge, at least one kind of resin selected from the group consisting of vinyl chloride resin, urethane resin, polystyrene, polyethylene, and nitrocellulose is preferable, and from the viewpoint of cost, the urethane resin is more preferable.

As the urethane resin, it is possible to use, for example, a urethane resin having a structure such as polyester-polyurethane, polyether-polyurethane, polyether-polyester-polyurethane, polycarbonate-polyurethane, polyester-polycarbonate-polyurethane, and polycaprolactone-polyurethane-polyolefin-polyurethane.

As the resin which is the material of the sponge, a resin into which at least one kind of polar group selected from the group consisting of $-COOM$, $-SO_3M$, $-OSO_3M$, $-P=O(OM)_2$, and $-O-P=O(OM)_2$ (all of which M represents a hydrogen atom or an alkali metal atom), $-OH$, $-NR_2$, and $-N^+R_3$ (all of which R represents a hydrocarbon group), an epoxy group, $-SH$, and $-CN$ is introduced as necessary by copolymerization or addition reaction, is preferable from the viewpoint of the dispersibility of the magnetic particles. An amount of such a polar group is preferably $10^{-8}$ mol/g to $10^{-1}$ mol/g, and more preferably $10^{-6}$ mol/g to $10^{-2}$ mol/g.

A weight-average molecular weight of the resin is preferably from 10000 to 200000, and more preferably from 30000 to 150000, from the viewpoints of durability of the medium and the dispersibility of the magnetic particles.

The weight-average molecular weight of the resin is a value measured by gel permeation chromatography (GPC) in terms of polystyrene.

Measurement by gel permeation chromatography (GPC) is performed using HLC (registered trademark)-8020 GPC (TOSOH CORPORATION) as a measurement apparatus, using three TSK gel (registered trademark) Super Multipore HZ-H (4.6 mm ID × 15 cm, TOSOH CORPORATION) columns as a column, and using THF (tetrahydrofuran) as an eluent. In addition, as measurement conditions, a sample concentration is 0.45% by mass, a flow rate is 0.35 ml/min, an injection amount of the sample is 10 μl, and a measurement temperature is 40°C, and an RI detector is used.

A calibration curve is created based on "standard sample TSK standard, polystyrene:" 8 samples of "F-40," "F-20," "F-4," "F-1," "A-5000," "A-2500," "A-1000," and "n-propylbenzene" of TOSOH CORPORATION.

A size of the void of the substrate is not particularly limited, and is, for example, preferably a size that allows elongated roots to enter.

The magnetic force of the magnetic particle is inversely proportional to the square of a distance from the magnetic particle. Therefore, from the viewpoint of making the magnetic force of the magnetic particles act on the roots more effectively, the size of the void that the substrate has is larger than a thickness of the root is preferably a size as close as possible to the thickness of the root such that the distance between the magnetic particles dispersedly carried by the substrate and the roots entered the voids becomes shorter.

Meanwhile, in a case where the size of the void that the substrate has is larger than the size of the seed, the seed is likely to enter the voids. The seed that has entered the voids may become in state of being unlikely to come into contact with the air, and being immersed in water all the time, and therefore the germination rate may be lowered or the seed may rot in some cases.

From such a viewpoint, in a case where the growing medium for plants of the present disclosure is used for hydroponic growing, it is preferable that the size of the void that the substrate has is smaller than the size of the seed.

A void volume in the substrate is not particularly limited, and is preferably 99.5% by volume or less and more preferably 99.0% by volume or less, from the viewpoint of ensuring the strength of the medium, for example.

A lower limit of the void volume in the substrate is not particularly limited, and is, for example, preferably 50.0% by volume or more.

The void volume (unit: % by volume) in the substrate is calculated from an apparent density (unit: g/cm$^3$) and a true density (unit: g/cm$^3$) of the substrate by the following formula. The apparent density of the substrate is calculated by dividing a weight of the substrate by an uncompressed volume in the substrate.

$$\text{Void volume} = 100 - (\text{apparent density/true density} \times 100)$$

For example, in a case where the substrate is the sponge formed of a resin material, the size of the void that the substrate has and the void volume in the substrate can be adjusted by controlling the types and an amount of a foaming agent used at the time of foam molding the sponge, molding conditions (temperature, pressure, and the like), and the like.

A size of the substrate is not particularly limited, and can be appropriately set according to the size of the seed, the types of plants, and the like.

A shape of the substrate is not particularly limited, and can be appropriately set according to growing environments, the purpose of use, and the like. Examples of the shape of the substrate include shapes such as a columnar shape and a prismatic shape.

A coercive force (Hc) of the magnetic particles dispersedly carried by the substrate is not particularly limited.

The coercive force (Hc) of the magnetic particles is, for example, preferably 40 kA/m or higher, more preferably 79 kA/m or higher, and even more preferably 120 kA/m or higher.

In the case where the coercive force (Hc) of the magnetic particles is 40 kA/m or higher, the magnetization is unlikely to attenuate and the magnetic force of the magnetic particles continuously acts on the seed and the roots, and therefore the effect of improving the germination rate and the effect of promoting the growth of plants are more likely to be exhibited.

The germination rate is not necessarily improved as the coercive force (Hc) of the magnetic particle becomes higher. The same can be said regarding the growth of plants. On the other hand, the higher the coercive force (Hc) of the magnetic particle becomes, the greater the magnetic force is required for magnetizing the particle.

From such a viewpoint, an upper limit of the coercive force (Hc) of the magnetic particle is preferably 319 kA/m or lower, more preferably 279 kA/m or lower, and even more preferably 239 kA/m or lower.

The coercive force (Hc) of the magnetic particle is a value measured under a condition of an applied magnetic field of 79.6 kA/m under an environment of an atmosphere temperature of 25°C using a vibrating sample magnetometer.

As a measurement apparatus, for example, VSM-P7 manufactured by TOEI INDUSTRY CO., LTD. can be suitably used. However, the measurement apparatus is not limited thereto.

The coercive force (Hc) of the magnetic particle can be adjusted by controlling a crystal structure of the magnetic particle, a particle shape, a composition of the material (for example, the types of additive elements), and the like.

A saturation magnetization ($\delta$s) per unit mass of the magnetic particle is not particularly limited.

As the saturation magnetization ($\delta$s) becomes higher, the germination rate can be improved or plant growth can be promoted with a small amount of the magnetic particles.

From such a viewpoint, the saturation magnetization ($\delta$s) of the magnetic particle is preferably 35 Am$^2$/kg or more, and more preferably 40 Am$^2$/kg or more.

An upper limit of the saturation magnetization ($\delta$s) of the magnetic particle is not particularly limited, and is preferably 130 Am$^2$/kg or less and more preferably 80 Am$^2$/kg or less, from the viewpoint of oxidation stability, for example.

The saturation magnetization ($\delta$s) of the magnetic particle is a value measured under the condition of the applied magnetic field of 79.6 kA/m under the environment of the atmosphere temperature of 25°C using the vibrating sample magnetometer.

As a measurement apparatus, for example, VSM-P7 manufactured by TOEI INDUSTRY CO., LTD. can be suitably used. However, the measurement apparatus is not limited thereto.

The material of the magnetic particle (hereinafter appropriately referred to as "magnetic particle material") is not particularly limited.

Examples of the material of the magnetic particle include an alloy (so-called a magnetic alloy) containing a metal showing ferromagnetism such as Fe, Co, and Ni, or an oxide (so-called a magnetic oxide).

The magnetic particle material may contain elements such as Al, Si, S, Sc, Ti, V, Cu, Y, Mo, Rh, Pd, Ag, Sn, Sb, Sm, Te, Ba, Ta, W, Re, Au, Bi, La, Ce, Pr, P, Zn, Sr, and B, in addition to the metal showing ferromagnetism such as Fe, Co, and Ni, from the viewpoints of improvement or adjustment of magnetization and coercive force, amelioration of durability, and the like.

From the viewpoints of improving the germination rate and promoting the plant growth, it is preferable that the magnetic particle has a high saturation magnetization ($\delta$s) as described above. However, a metal with a high saturation magnetization ($\delta$s) tends to corrode, leading to a decrease in a level of magnetization. For such a reason, as the magnetic particle material, a magnetic oxide is preferable, and a magnetic oxide containing Fe as a main component is more preferable, from the viewpoint of preventing demagnetization due to corrosion. The term "main component" referred herein means a component that is contained by 50% by mass or more in a percentage composition of the magnetic oxide.

Examples of magnetic oxide containing Fe as the main component include hexagonal ferrite (barium ferrite, strontium ferrite, and the like), magnetite, $\gamma$-ferrite, and the like.

As the magnetic particle material, a commercially available product that is on the market may be used.

The shape of the magnetic particle is not particularly limited.

Examples of the shape of the magnetic particle include shapes such as acicular, spindle, spherical, tabular, and cubic shapes. The "spherical shape" includes a spheroidal shape, an ovoid shape, and the like, in addition to a true spherical shape.

A size of the magnetic particle is not particularly limited.

An average particle diameter of the magnetic particles is preferably 5 $\mu$m or smaller and more preferably 2 $\mu$m or smaller, from the viewpoint that the magnetic particles are dispersed in the substrate in a state closer to a uniformly dispersed state.

In a case where the particle diameter of the magnetic particles is too small, thermal fluctuation occurs and magnetization cannot be maintained. Therefore, a lower limit of the average particle diameter of the magnetic particles is generally 0.01 $\mu$m or higher, from the viewpoint of securing the coercive force.

The average particle diameter of the magnetic particles is a value measured by the following method.

The magnetic particles are observed using a transmission electron microscope (TEM). In an image of a captured picture, a projection area of 500 magnetic particles arbitrarily extracted is measured. An equivalent circular diameter is obtained from the measured projection area. A value obtained by arithmetically averaging the obtained value of the equivalent circular diameter is taken as the average particle diameter of the magnetic particles. The equivalent circular diameter is obtained by importing the captured picture of the magnetic particles in image processing software (for example, "ImageJ" manufactured by the National Institutes of Health), performing image processing, and calculating a diameter of a circle having an area equal to the projection area of each particle.

A content rate of the magnetic particles in the growing medium for plants of the present disclosure is not particularly limited.

The content rate of the magnetic particles in the growing medium for plants is preferably 4% by mass or more, more preferably 5% by mass or more, even more preferably 9% by mass or more, and particularly preferably 15% by mass or more with respect to a total mass of the growing medium for plants, from the viewpoint of improving the germination rate by increasing the magnetization of the growing medium for plants, thereby promoting the growth of plants, for example.

The germination rate is not necessarily improved as the content rate of the magnetic particles in the growing medium for plants becomes higher. The same can be said regarding the growth of plants. Meanwhile, in a case where a large amount of the magnetic particles are contained in the growing medium for plants, the cost increases.

From such a viewpoint, an upper limit of the content rate of the magnetic particles in the growing medium for plants is preferably 60% by mass or less, and more preferably 50% by mass or less with respect to the total mass of the growing medium for plants.

The magnetic particles in the growing medium for plants of the present disclosure are the magnetized magnetic particles.

A method for magnetizing the magnetic particles is not particularly limited, and can be appropriately selected from known magnetization methods. Examples of the method for magnetizing the magnetic particles include a method in which magnetization is performed using a permanent magnet such as a neodymium magnet, a method in which magnetization is performed using a solenoid, and the like.

The magnetic force applied to the magnetic particles is preferably at least three times the coercive force of the magnetic particles in general, from the viewpoint of saturation magnetization of the magnetic particles.

The magnetization may be performed on magnetic particles not being dispersedly carried by the substrate yet, or on magnetic particles which have been dispersedly carried by the substrate.

The growing medium for plants of the present disclosure can be applied to both soil growing and hydroponic growing, and particularly is a medium suitable for hydroponic growing.

In addition, the growing medium for plants of the present disclosure can be preferably used as the seedling-raising medium.

Examples of another embodiment of the present invention include a method of using a medium in which the magnetized magnetic particles are dispersedly carried by the substrate having the voids, for growing plants.

In addition, examples of still another embodiment of the present invention include a method for growing plants, which includes performing sowing in the medium in which the magnetized magnetic particles are dispersedly carried by the substrate having the voids.

A method for manufacturing the growing medium for plants of the present disclosure will be described.

The growing medium for plants of the present disclosure can be manufactured by, for example, the following method. However, the method for manufacturing the growing medium for plants of the present disclosure is not limited to the following method.

In a case where the substrate of the growing medium for plants of the present disclosure is the sponge, it is possible to manufacture the growing medium for plants in which the magnetic particles are dispersedly carried by the sponge, by, for example, foam molding a resin composition containing a resin (preferably a urethane resin), the magnetic particles, and the foaming agent.

The foaming agent is not particularly limited, and can be appropriately selected from known foaming agents used for foam molding of resins.

An amount used of the foaming agent is not particularly limited, and can be appropriately set in consideration of the size of void, the void volume, and the like in the substrate.

The magnetization of the magnetic particles may be performed before the foam molding, or may be performed after the foam molding.

In a case where the substrate of the growing medium for plants is the cotton, it is possible to manufacture the growing medium for plants in which the magnetic particles are dispersedly carried by the cotton, by, for example, applying the magnetic particles to the entire cotton.

In addition, in a case where the substrate of the growing medium for plants is the rock wool, it is possible to manufacture the growing medium for plants in which the magnetic particles are dispersedly carried by the rock wool, by, for example, applying the magnetic particles to the entire rock wool, similarly to the above case of the cotton.

The magnetization of the magnetic particles may be performed before applying the magnetic particles to the cotton or rock wool, or after applying the magnetic particles to the cotton or rock wool.

The growing medium for plants of the present disclosure is preferably manufactured by foam molding the resin composition containing the resin, the magnetic particles, and the foaming agent, from the viewpoint that it is easy to manufacture the growing medium for plants in which the magnetic particles are dispersedly carried by the substrate having the voids, in a uniform state or in a state closer to a uniformly dispersed state.

The method for manufacturing the growing medium for plants by foam molding the resin composition containing the resin, the magnetic particles, and the foaming agent is a preferable method also from the viewpoint of mass productivity.

Examples

Hereinafter, the present invention will be described more specifically with reference to examples. The present invention is not limited to the following examples unless the scope of the present invention is not exceeded.

In this example, the coercive force (Hc), the saturation magnetization ($\delta s$), and the average particle diameter of the magnetic particles were measured by the method described above.

The vibrating sample magnetometer (model number: VSM-P7) manufactured by TOEI INDUSTRY CO., LTD. was used as the measurement apparatus for measuring the coercive force (Hc) and the saturation magnetization ($\delta s$) of the magnetic particles.

The ImageJ manufactured by the National Institutes of Health was used as image processing software to measure the average particle diameter of the magnetic particles.

In addition, a void volume in the substrate was calculated by the above-described method.

[Manufacturing of Growing Medium for Plants]

<Example 1>

Magnetic particles [BaFe (barium ferrite), shape: tabular shape, average particle diameter: 0.02 $\mu$m, coercive force (Hc): 203.5 kA/m, saturation magnetization ($\delta$s): 48 A·m$^2$/kg, BET Specific Surface Area value (SSA): 77 m$^2$/g], which were magnetized by using a neodymium magnet (remanent magnetic flux density: 1.2 T), were applied to the entire absorbent cotton (void volume: 98.2% by volume), and therefore a growing medium for plants of Example 1 in which the magnetized magnetic particles were dispersed in the absorbent cotton in a state closer to a uniformly dispersed state was obtained. A content rate of the magnetized magnetic particles in the growing medium for plants of Example 1 was 4.8% by mass with respect to a total mass of the growing medium for plants.

<Example 2>

A growing medium for plants of Example 2 was obtained by performing the same operation as in Example 1 except that an amount used of the magnetic particles was changed in Example 1. A content rate of the magnetized magnetic particles in the growing medium for plants of Example 2 was 9% by mass with respect to the total mass of the growing medium for plants.

<Example 3>

A growing medium for plants of Example 3 was obtained by performing the same operation as in Example 1 except that an amount used of the magnetic particles was changed in Example 1. A content rate of the magnetized magnetic particles in the growing medium for plants of Example 3 was 23% by mass with respect to the total mass of the growing medium for plants.

<Example 4>

A growing medium for plants of Example 4 was obtained by performing the same operation as in Example 1 except that an amount used of the magnetic particles was changed in Example 1. A content rate of the magnetized magnetic particles in the growing medium for plants of Example 4 was 50% by mass with respect to the total mass of the growing medium for plants.

<Comparative Example 1>

The absorbent cotton used in Example 1 was used as a growing medium for plants of Comparative Example 1.

[Test of Plant Growth]

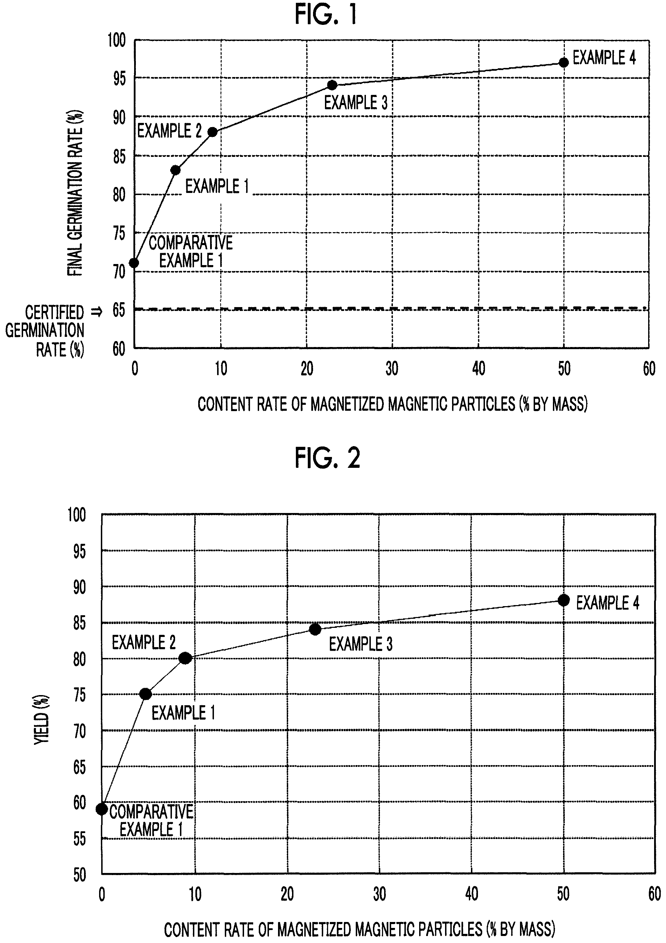

The growing mediums for plants of Examples 1 to 4 and Comparative Example 1 were used to perform growing of plants, and a final germination rate (unit: %) and a yield (unit: %) were evaluated. The results are shown in Table 1, and Figs. 1 and 2.

A Petri dish with a diameter of 90 mm was laid with the growing medium for plants so that a thickness of the medium became about 3 mm, and then 100 seeds of Eruca sativa Mill [cultivar: ODYSSEY, made in Denmark, certified germination rate: 65%, SAKATA SEED CORPORATION] were sowed on the growing medium for plants so as not to overlap each other. Subsequently, after irrigation to such a degree that the seeds were immersed, growing was carried out in a room having an air temperature of about 17°C to 20°C. The Petri dish in which the seeds were sowed was placed in a dark place for 2 days for germination, and then the dish was moved to a light place for spindly growth. Water was added as appropriate.

After sowing, the number of germinated seeds was continuously measured so as to calculate a germination rate. Then, a germination rate at a moment at which the germination rate became almost constant, that is, 12 days after sowing, was taken as the final germination rate.

In addition, 14 days after sowing, a length of a principal axis of an aerial part was measured, a plant grown to have the length of 21 mm or longer was judged as a good product, and the yield was calculated according to Formula (1).

$$\text{Yield (\%)} = (\text{number of good products/number of times of sowing}) \times 100 \qquad (1)$$

Values of the final germination rate and the yield were rounded to tenths after the decimal point.

[Table 1]

|  | Final germination rate (%) | Yield (%) | Average plant height of good product (mm) | Content rate of magnetized magnetic particles (% by mass) |
|---|---|---|---|---|
| Example 1 | 83 | 75 | 32 | 4.8 |
| Example 2 | 88 | 80 | 31 | 9 |
| Example 3 | 94 | 84 | 31 | 23 |
| Example 4 | 97 | 88 | 31 | 50 |
| Comparative Example 1 | 71 | 59 | 31 | 0 |

As shown in Table 1 and Fig. 1, all of the final germination rates of the seeds of Eruca sativa Mill sowed in the growing mediums for plants of Examples 1 to 4 were higher than the final germination rate of the seeds of Eruca sativa Mill sowed in the growing medium for plants of Comparative Example 1.

In addition, as shown in Table 1 and Fig. 2, all of the yields of the Eruca sativa Mill sowed in the growing mediums for plants of Examples 1 to 4 were higher than the yield of the Eruca sativa Mill sowed in the growing medium for plants of Comparative Example 1.

Based on the above results, it became clear that the improvement in the germination rate and promotion of plant growth can be realized according to the growing mediums for plants of Examples 1 to 4.

The disclosure of JP2016-135867 filed on July 8, 2016 is hereby incorporated in the present specification by reference in its entirety.

All documents, patent applications, and technical standards described in the present specification are incorporated in the present specification by reference in their entirety to the same extent as in the case in which individual documents, patent applications, and technical standards being incorporated by reference is specifically and respectively noted.

**Claims**

1. A growing medium for plants, comprising:

    a substrate having voids; and
    a magnetized magnetic particle dispersedly carried by the substrate.

2. The growing medium for plants according to claim 1,
   wherein a coercive force of the magnetic particle is 40 kA/m or higher.

3. The growing medium for plants according to claim 1,
   wherein a coercive force of the magnetic particle is from 40 kA/m to 319 kA/m.

4. The growing medium for plants according to claim 1,
   wherein a coercive force of the magnetic particle is from 120 kA/m to 239 kA/m.

5. The growing medium for plants according to any one of claims 1 to 4,
   wherein a saturation magnetization of the magnetic particle is 35 Am$^2$/kg or higher.

6. The growing medium for plants according to any one of claims 1 to 4,
   wherein a saturation magnetization of the magnetic particle is from 35 Am$^2$/kg to 130 Am$^2$/kg.

**7.** The growing medium for plants according to any one of claims 1 to 4,
wherein a saturation magnetization of the magnetic particle is from 40 Am$^2$/kg to 80 Am$^2$/kg.

**8.** The growing medium for plants according to any one of claims 1 to 7,
wherein a content rate of the magnetic particle is from 4% by mass to 60% by mass with respect to a total mass of the growing medium for plants.

**9.** The growing medium for plants according to any one of claims 1 to 8, which is used for hydroponic growing.

**10.** The growing medium for plants according to any one of claims 1 to 9, which is used as a seedling-raising medium.

## FIG. 1

FINAL GERMINATION RATE (%)

CERTIFIED GERMINATION RATE (%)

CONTENT RATE OF MAGNETIZED MAGNETIC PARTICLES (% BY MASS)

## FIG. 2

YIELD (%)

CONTENT RATE OF MAGNETIZED MAGNETIC PARTICLES (% BY MASS)

## INTERNATIONAL SEARCH REPORT

| International application No. |
| --- |
| PCT/JP2017/021502 |

A. CLASSIFICATION OF SUBJECT MATTER
*A01G1/00*(2006.01)i, *A01G7/04*(2006.01)i, *A01G9/10*(2006.01)i, *A01G31/00*
(2006.01)i

According to International Patent Classification (IPC) or to both national classification and IPC

B. FIELDS SEARCHED

Minimum documentation searched (classification system followed by classification symbols)
A01G1/00, A01G7/04, A01G9/10, A01G31/00

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2015-130797 A  (Toyo Tire and Rubber Co., Ltd.), 23 July 2015 (23.07.2015), paragraphs [0027] to [0032] (Family: none) | 1-10 |
| A | JP 2003-164228 A  (MIN, YOUNG KY), 10 June 2003 (10.06.2003), paragraphs [0010] to [0026] & KR 10-2003-0042785 A | 1-10 |
| A | JP 2001-269051 A  (Hida Sangyo Kabushiki Kaisha), 02 October 2001 (02.10.2001), paragraphs [0005] to [0008] (Family: none) | 1-10 |

☐  Further documents are listed in the continuation of Box C.      ☐   See patent family annex.

| | |
| --- | --- |
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 29 August 2017 (29.08.17) | 05 September 2017 (05.09.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015130797 A
- JP 8290990 A
- JP H08290990 A
- JP 2016135867 A